# EUROPÄISCHE PATENTSCHRIFT

(11) **EP 4 151 062 B1**
(45) Veröffentlichungstag und Bekanntmachung des Hinweises auf die Patenterteilung: **11.03.2026**
(21) Anmeldenummer: 22184002.8
(22) Anmeldetag: 11.07.2022
(51) Int. Cl.: A01B 69/04

(54) **VERFAHREN ZUR BEARBEITUNG EINES FELDES MITTELS EINER LANDWIRTSCHAFTLICHEN ARBEITSMASCHINE**
METHOD FOR WORKING A FIELD USING AN AGRICULTURAL WORKING MACHINE
PROCÉDÉ DE TRAITEMENT D'UN CHAMP AU MOYEN D'UNE MACHINE DE TRAVAIL AGRICOLE

(30) Priorität: 21.09.2021 DE 102021124382
(43) Veröffentlichungstag der Anmeldung: 22.03.2023
(73) Patentinhaber: CLAAS E-Systems GmbH, 49201 Dissen (DE)
(72) Erfinder: Skiba, Andreas, 33647 Bielefeld (DE); Töniges, Torben, 33602 Bielefeld (DE); Bone, Sven, 49124 Georgsmarienhütte (DE); Lücke, Andreas, 33184 Altenbeken (DE); Redenius, Jannik, 32361 Pr. Oldendorf (DE)
(74) Vertreter: CLAAS Gruppe

(56) Entgegenhaltungen:
- WO-A1-2017/214566
- DE-A1- 102014 201 203
- US-A1- 2019 302 783
- US-A1- 2020 103 904

## Beschreibung

Die vorliegende Erfindung betrifft ein Verfahren zur Bearbeitung eines Feldes mittels einer landwirtschaftlichen Arbeitsmaschine gemäß dem Oberbegriff von Anspruch 1.

Landwirtschaftliche Arbeitsmaschinen werden tendenziell immer größer. Ihre Steuerung ist ein komplexer Vorgang, bei dem der Fahrer viele unterschiedliche Parameter der Steuerung der landwirtschaftlichen Arbeitsmaschine, das Umfeld und weiteres überblicken muss. In diesem Kontext kann es schnell dazu kommen, dass ein Hindernis zu spät gesehen oder falsch eingeschätzt wird. Selbst ein rechtzeitiges Stoppen vor einem Hindernis kann zur Notwendigkeit eines unerwünschten Rangierens führen. Bei diesen Hindernissen kann es sich beispielsweise um Brunnenschächte oder Gullideckel handeln, die bei hohem Feldbestand schwer erkennbar sind.

Zusätzlich ist auch in hochautomatisierten oder autonomen Szenarien eine Umfeldwahrnehmung durch die landwirtschaftliche Arbeitsmaschine zur Vermeidung von Kollisionen notwendig.

Der bekannte Stand der Technik (EP 3 529 556 A1) betrifft ein Verfahren zur Bearbeitung eines Feldes, bei dem eine Fahrroute basierend auf einer Hinderniskarte geplant wird. Die Nutzung einer derartigen Hinderniskarte ist grundsätzlich vorteilhaft, um Kollisionen mit Hindernissen zu vermeiden. Problematisch ist allerdings, dass manche Hindernisse veränderlich sind. Beispielsweise können Brunnenschächte geöffnet werden und Bäume wachsen. Auch können neue Hindernisse auftauchen oder die Position oder die Eigenschaften eines Hindernisses können in der Hinderniskarte falsch oder ungenau abgelegt sein.

Es ist dabei eine Herausforderung, den bekannten Stand der Technik diesbezüglich zu verbessern.

Ein weiterer bekannter Stand der Technik (US 2019/302783 A1) beschreibt ein Verfahren zur Bearbeitung eines Feldes mittels eines landwirtschaftlichen Arbeitsfahrzeugs, wobei das landwirtschaftliche Arbeitsfahrzeug einen Sensor aufweist, der an dem landwirtschaftlichen Arbeitsfahrzeug angeordnet ist. Das landwirtschaftliche Arbeitsfahrzeug weist ein Assistenzsystem auf und greift auf eine Hinderniskarte zu. Die Hinderniskarte wird mittels des Sensors während der Bearbeitung des Arbeitsbereichs aktualisiert. Mehrere Arbeitsfahrzeuge können gleichzeitig auf dem Feld fahren. Die Karte kann von mehreren Arbeitsfahrzeugen mit einem oder mehreren Sensoren aktualisiert werden, während die Arbeitsfahrzeuge durch den Arbeitsbereich fahren.

Der Erfindung liegt das Problem zugrunde, das bekannte Verfahren derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, dass eine Hinderniskarte dynamisch aktualisiert werden kann, wenn an der landwirtschaftlichen Arbeitsmaschine ein entsprechender Sensor vorgesehen ist. Somit können Ungenauigkeiten der Hinderniskarte reduziert werden. Dies führt zu weniger falschen Warnungen vor Hindernissen oder falschen Reaktionen auf Hindernisse und zu weniger Kollisionen mit Hindernissen. Gleichzeitig wird so die Hinderniskarte für spätere Bearbeitungen des Feldes aktualisiert, womit ein Vorteil gegenüber einer rein sensorischen Hinderniserkennung entsteht. Beispielsweise können so auch weitere landwirtschaftliche Arbeitsmaschinen ohne Sensor das Feld anschließend sicherer bearbeiten. In diesem Zusammenhang ist es erfindungsgemäß von Vorteil, wenn die landwirtschaftliche Arbeitsmaschine Teil eines Verbundes aus landwirtschaftlichen Arbeitsmaschinen sind, deren landwirtschaftliche Arbeitsmaschinen die Hinderniskarte miteinander teilen. So können mehrere landwirtschaftliche Arbeitsmaschinen von den Aktualisierungen der Hinderniskarte profitieren oder generell mit einer Hinderniskarte versorgt werden.

Im Einzelnen wird vorgeschlagen, dass das Fahrerassistenzsystem die Hinderniskarte mittels des Sensors während der Bearbeitung des Feldes aktualisiert.

Gemäß Anspruch 2 kann vorgesehen sein, dass der Fahrer in die Aktualisierung der Hinderniskarte eingebunden wird. Dieser kann beispielsweise entscheiden, ob ein Hindernis korrekt erkannt wurde oder allgemein irrelevant ist.

Gegenstand von Anspruch 3 ist die Möglichkeit, eine Mustererkennung zu nutzen, um Hindernisse in Kategorien einzuordnen. Interessant sind dabei insbesondere solche Hindernisse, die nicht oder nicht dauerhaft sichtbar sind. Diese können vom Fahrer, anders als beispielsweise ein Baum, nur schwer ohne Unterstützung beachtet werden.

Anspruch 4 betrifft die Möglichkeit, die aktualisierte Hinderniskarte in Echtzeit zu teilen. Dadurch profitieren mehrere der landwirtschaftlichen Arbeitsmaschinen des Verbundes von den Erkenntnissen der landwirtschaftlichen Arbeitsmaschine.

Im Folgenden wird die Erfindung anhand einer lediglich ein Ausführungsbeispiel darstellenden Zeichnung näher erläutert. In der Zeichnung zeigt
- Fig. 1: schematisch das vorschlagsgemäße Verfahren aus Sicht einer landwirtschaftlichen Arbeitsmaschine und
- Fig. 2: einen Verbund landwirtschaftlicher Arbeitsmaschinen bei der Bearbeitung eines Feldes

Die vorschlagsgemäße Lösung lässt sich auf einen weiten Bereich landwirtschaftlicher Arbeitsmaschinen 1, insbesondere selbstfahrender landwirtschaftlicher Arbeitsmaschinen 1, anwenden. Dazu gehören Zugmaschinen, insbesondere Traktoren, und Erntemaschinen, insbesondere Mähdrescher, Feldhäcksler o.dgl. Derartige landwirtschaftliche Arbeitsmaschinen 1 können eine Vielzahl von Feldbearbeitungen durchführen, beispielsweise ein Pflügen, ein Düngen, eine Aussaat und dergleichen. Bei diesen Feldbearbeitungen müssen zum Teil Hindernisse 2 auf dem Feld 3 beachtet werden, die sogar von der Art der Feldbearbeitung abhängig sein können. So sind unterirdische Hindernisse 2 möglicherweise beim Pflügen relevant, bei einem Spritzvorgang jedoch nicht.

Das in den Figuren dargestellte und insoweit bevorzugte Ausführungsbeispiel betrifft ein Verfahren zur Bearbeitung eines Feldes 3 mittels einer landwirtschaftlichen Arbeitsmaschine 1, wobei die landwirtschaftliche Arbeitsmaschine 1 einen Sensor 4 aufweist, der an der landwirtschaftlichen Arbeitsmaschine 1 angeordnet ist, wobei die landwirtschaftliche Arbeitsmaschine 1 ein Fahrerassistenzsystem 5 aufweist, das eine Hinderniskarte 6 aufweist. Grundsätzlich kann der Sensor 4 zum Beispiel ein Radar-Sensor, eine Kamera oder ein Lidar-Sensor sein. Auch mehrere Sensoren 4 können vorgesehen sein, beispielsweise eine Kamera und ein Lidar-Sensor.

Das Fahrerassistenzsystem 5 ist vorzugsweise auf der landwirtschaftlichen Arbeitsmaschine 1 und/oder in der Cloud angeordnet. Es kann sich somit um ein Fahrerassistenzsystem 5 im engen Sinne handeln, das den Fahrer 7 bei der Steuerung der landwirtschaftlichen Arbeitsmaschine 1 unterstützt, aber auch um ein Fahrerassistenzsystem 5 im weiten Sinne, das Planungsmodule und dergleichen umfassen kann. Das Fahrerassistenzsystem 5 umfasst Hardware und Software.

Bei den Hindernissen 2 handelt es sich hier und vorzugsweise um statische Hindernisse 2.

Wesentlich ist nun, dass das Fahrerassistenzsystem 5 die Hinderniskarte 6 mittels des Sensors 4 während der Bearbeitung des Feldes 3 aktualisiert.

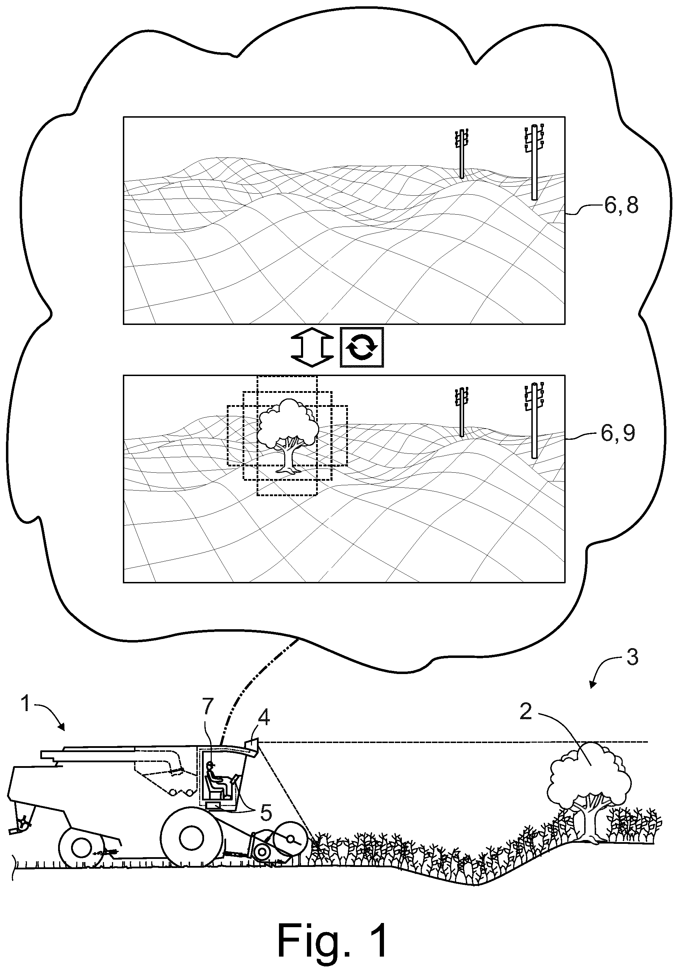

Fig. 1 zeigt schematisch wie eine alte Hinderniskarte 8 (oben) zu einer aktualisierten Hinderniskarte 9 (unten) wird, nachdem die landwirtschaftliche Arbeitsmaschine 1 einen Baum erkannt hat. Dieses Beispiel ist rein schematisch zu verstehen. Gerade bei Bäumen ist zwar eine Veränderung der Eigenschaften jedoch kein spontanes Auftauchen zu erwarten. Beispiele für temporäre Hindernisse 2, die hier und vorzugsweise nicht in die Hinderniskarte 6 aufgenommen werden, sind Feldbestandsreste, Strohballen und dergleichen.

Grundsätzlich kann vorgesehen sein, dass das Fahrerassistenzsystem 5 bei Annäherung an ein Hindernis 2 der Hinderniskarte 6, insbesondere bei Unterschreiten eines Abstandsschwellwerts, und/oder bei Überschreiten eines Schwellwerts einer auf Basis einer Fahrtrichtung und/oder Fahrroute ermittelten Kollisionswahrscheinlichkeit eine Reaktionsroutine durchführt. Die Reaktionsroutine kann ein Stoppen der landwirtschaftlichen Arbeitsmaschine 1 und/oder ein Ausweichmanöver und/oder eine Information an den Fahrer 7 umfassen.

Bei dem Sensor 4 kann es sich beispielsweise um einen Lidarsensor, einen Radarsensor, einen Ultraschallsensor oder eine Kamera handeln.

Die Aktualisierung der Hinderniskarte 6 kann ein Hinzufügen oder Entfernen von Hindernissen 2, aber auch ein Anpassen der Position von Hindernissen 2, deren Umfang, Art oder dergleichen sein.

Weiter ist hier und vorzugsweise vorgesehen, dass die landwirtschaftliche Arbeitsmaschine 1 Teil eines Verbundes 10 von landwirtschaftlichen Arbeitsmaschinen 1 ist, der das Feld 3 gemeinsam bearbeitet, dass die landwirtschaftlichen Arbeitsmaschinen 1 des Verbundes 10 miteinander direkt oder indirekt, insbesondere über das Internet, kommunizieren, dass die landwirtschaftlichen Arbeitsmaschinen 1 des Verbundes 10 die Hinderniskarte 6 und/oder eine aktualisierte Hinderniskarte 9 miteinander teilen.

Der Verbund 10 kann aus Master- und Slave-Arbeitsmaschinen oder aus gleichberechtigten Arbeitsmaschinen bestehen. Es kann vorgesehen sein, dass bei Hinzukommen einer neuen landwirtschaftlichen Arbeitsmaschine 1 zu dem Verbund 10 und der Feldbearbeitung die Hinderniskarte 6 in der aktuellsten Fassung an die neue landwirtschaftliche Arbeitsmaschine 1 versendet wird. Die Kommunikation kann dabei über direkten Funk oder indirekt über das Internet durchgeführt werden. Es kann grundsätzlich auch ein Farm-Management-System zwischengeschaltet sein.

Hier und vorzugsweise ist es somit so, dass eine landwirtschaftliche Arbeitsmaschine 1 ein Neues oder nicht korrekt in der Hinderniskarte 6 abgelegtes Hindernis 2 erkennt und dieses mindestens einer anderen landwirtschaftlichen Arbeitsmaschine 1 zur Verfügung stellt.

Weisen mehrere der landwirtschaftlichen Arbeitsmaschinen 1 Sensoren 4 auf, entsteht so die Möglichkeit, Aktualisierungen der Hinderniskarte 6 über einen Konsensus-Mechanismus vorzunehmen, um falsche Aktualisierungen zu reduzieren. Beispielsweise kann ein Hindernis 2 erst aufgenommen werden, wenn dieses von zwei landwirtschaftlichen Arbeitsmaschinen 1 erkannt wurde. Zusätzlich ergibt sich die Möglichkeit, die Erkennung oder eine noch zu erläuternde Klassifikation des Hindernisses 2 oder eine Ermittlung von Eigenschaften des Hindernisses 2 auf der Basis der Sensoren 4 mehrerer landwirtschaftlicher Arbeitsmaschinen 1 vorzunehmen. Insbesondere zur Erfassung der Abmessungen des Hindernisses 2 ist dies vorteilhaft.

Zusätzlich oder alternativ kann vorgesehen sein, dass die Hinderniskarte 6 zusätzlich basierend auf einer Fahrereingabe aktualisiert wird, vorzugsweise, dass das Fahrerassistenzsystem 5 ein Hindernis 2 oder eine Eigenschaft eines Hindernisses 2 mittels des Sensors 4 ermittelt, dem Fahrer 7 zur Prüfung anzeigt und abhängig von einer Eingabe des Fahrers 7 in Reaktion auf die Anzeige die Hinderniskarte 6 aktualisiert.

Somit behält der Fahrer 7 die Hoheit darüber, was als Hindernis 2 angesehen wird und kann auf Falscherkennungen reagieren. Grundsätzlich kann anstelle des Fahrers 7 auch ein anderer Benutzer entscheiden. Diese Entscheidung muss nicht zeitnah erfolgen. Dem Benutzer können dafür beispielsweise Bilddaten der Kamera zur Verfügung gestellt werden. Insbesondere kann die Entscheidung nachträglich, vorzugsweise über ein Farm Management System, erfolgen.

Weiter ist hier und vorzugsweise vorgesehen, dass das Fahrerassistenzsystem 5 mittels des Sensors 4 erkannte Hindernisse 2 auf Basis einer Mustererkennung in unterschiedliche Kategorien einordnet, vorzugsweise, dass das Fahrerassistenzsystem 5 die Hindernisse 2 zumindest in unsichtbare Hindernisse 2 und/oder zeitweise sichtbare Hindernisse 2 und/oder permanent sichtbare Hindernisse 2 einordnet.

Aus der Kategorie der Hindernisse 2 können Eigenschaften und/oder Reaktionen auf das Hindernis 2 hergeleitet werden. Beispielsweise können manche Hindernisse 2 wie Feldbestandsreste einfach überfahren werden. Das Fahrerassistenzsystem 5 kann die Hindernisse 2 zusätzlich in die Kategorien permanente und temporäre Hindernisse 2 einordnen, oder temporäre Hindernisse 2 nicht als Hindernisse 2, die die Hinderniskarte 6 betreffen bzw. aktualisieren sollen, erkennen.

Unsichtbare Hindernisse 2 können beispielsweise Drainagen sein, die gegebenenfalls mittels des Radarsensors erkennbar sind. Es ist auch denkbar, indirekt auf die Hindernisse 2 zu schließen, beispielsweise durch fehlenden oder veränderten Feldbestand in einem Feldbereich. Zeitweise sichtbare Hindernisse 2 sind zum Beispiel Entwässerungsschächte, permanent sichtbar sind Hindernisse 2 wie Bäume. Diese Kategorien können zusätzlich oder alternativ auch die bereits in der Hinderniskarte 6 enthaltenen Hindernisse 2 kategorisieren.

Weiter ist hier und vorzugsweise vorgesehen, dass in dem Verbund 10 Aktualisierungen der Hinderniskarte 6 in Echtzeit von mindestens einer landwirtschaftlichen Arbeitsmaschine 1 an mindestens eine weitere landwirtschaftliche Arbeitsmaschine 1 kommuniziert werden, vorzugsweise, dass ein Fahrerassistenzsystem 5 der weiteren landwirtschaftlichen Arbeitsmaschine 1 auf ein derart aktualisiertes Hindernis 2 mittels einer Ansteuerung der landwirtschaftlichen Arbeitsmaschine 1, insbesondere eine Änderung einer Fahrroute oder ein Anhalten der landwirtschaftlichen Arbeitsmaschine 1, reagiert.

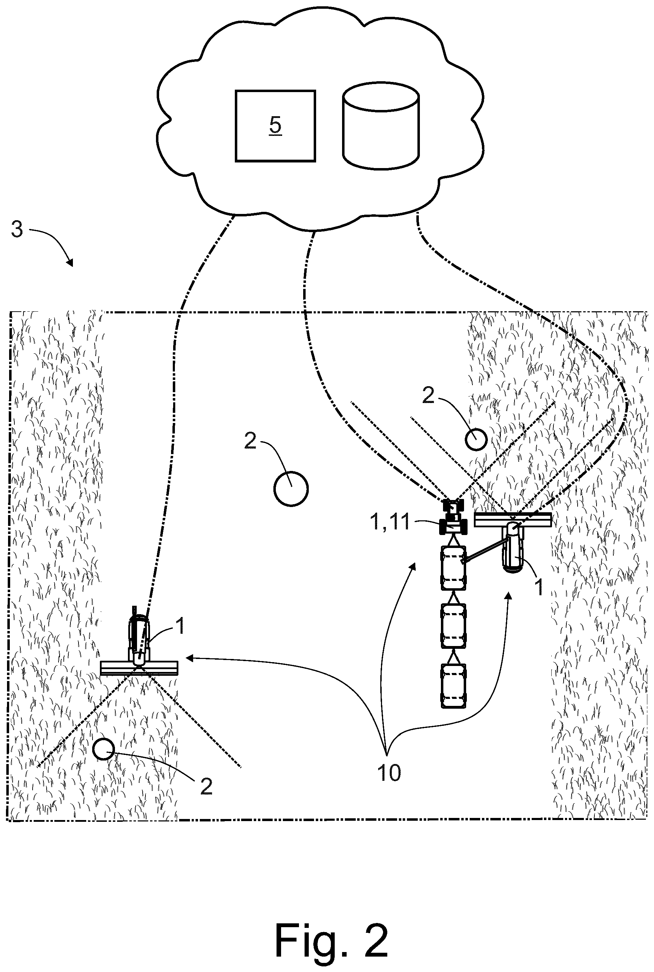

So kann beispielsweise eine einzige landwirtschaftliche Arbeitsmaschine 1 mit einem Sensor 4 auch eine oder mehrere andere landwirtschaftliche Arbeitsmaschinen 1, beispielsweise das in Fig. 2 gezeigte Ladefahrzeug 11, schützen.

### Bezugszeichenliste

- 1: landwirtschaftliche Arbeitsmaschine
- 2: Hindernis
- 3: Feld
- 4: Sensor
- 5: Fahrerassistenzsystem
- 6: Hinderniskarte
- 7: Fahrer
- 8: alte Hinderniskarte
- 9: aktualisierte Hinderniskarte
- 10: Verbund
- 11: Ladefahrzeug

## Patentansprüche

1. Verfahren zur Bearbeitung eines Feldes (3) mittels einer landwirtschaftlichen Arbeitsmaschine (1), wobei die landwirtschaftliche Arbeitsmaschine (1) einen Sensor (4) aufweist, der an der landwirtschaftlichen Arbeitsmaschine (1) angeordnet ist, wobei die landwirtschaftliche Arbeitsmaschine (1) ein Fahrerassistenzsystem (5) aufweist, das eine Hinderniskarte (6) aufweist,
wobei das Fahrerassistenzsystem (5) die Hinderniskarte (6) mittels des Sensors (4) während der Bearbeitung des Feldes (3) aktualisiert,
wobei die landwirtschaftliche Arbeitsmaschine (1) Teil eines Verbundes (10) von landwirtschaftlichen Arbeitsmaschinen (1) ist, der das Feld (3) gemeinsam bearbeitet,
wobei die landwirtschaftlichen Arbeitsmaschinen (1) des Verbundes (10) miteinander direkt oder indirekt, insbesondere über das Internet, kommunizieren,
wobei die landwirtschaftlichen Arbeitsmaschinen (1) des Verbundes (10) die Hinderniskarte (6) und/oder eine aktualisierte Hinderniskarte (9) miteinander teilen,
wobei mindestens zwei landwirtschaftliche Arbeitsmaschinen (1) des Verbundes (10) einen Sensor (4) aufweisen, und
wobei ein Hindernis (6) erst in die Hinderniskarte (6) aufgenommen wird, wenn dieses von diesen zwei landwirtschaftlichen Arbeitsmaschinen (1) erkannt wurde.

2. Verfahren nach Anspruch 1, **dadurch gekennzeichnet, dass** die Hinderniskarte (6) zusätzlich basierend auf einer Fahrereingabe aktualisiert wird, vorzugsweise, dass das Fahrerassistenzsystem (5) ein Hindernis (2) oder eine Eigenschaft eines Hindernisses (2) mittels des Sensors (4) ermittelt, dem Fahrer (7) zur Prüfung anzeigt und abhängig von einer Eingabe des Fahrers (7) in Reaktion auf die Anzeige die Hinderniskarte (6) aktualisiert.

3. Verfahren nach Anspruch 1 oder 2, **dadurch gekennzeichnet, dass** das Fahrerassistenzsystem (5) mittels des Sensors (4) erkannte Hindernisse (2) auf Basis einer Mustererkennung in unterschiedliche Kategorien einordnet, vorzugsweise, dass das Fahrerassistenzsystem (5) die Hindernisse (2) zumindest in unsichtbare Hindernisse (2) und/oder zeitweise sichtbare Hindernisse (2) und/oder permanent sichtbare Hindernisse (2) einordnet.

4. Verfahren nach einem der Ansprüche 1 bis 3, **dadurch gekennzeichnet, dass** in dem Verbund (10) Aktualisierungen der Hinderniskarte (6) in Echtzeit von mindestens einer landwirtschaftlichen Arbeitsmaschine (1) an mindestens eine weitere landwirtschaftliche Arbeitsmaschine (1) kommuniziert werden, vorzugsweise, dass ein Fahrerassistenzsystem (5) der weiteren landwirtschaftlichen Arbeitsmaschine (1) auf ein derart aktualisiertes Hindernis (2) mittels einer Ansteuerung der landwirtschaftlichen Arbeitsmaschine (1), insbesondere eine Änderung einer Fahrroute oder ein Anhalten der landwirtschaftlichen Arbeitsmaschine (1), reagiert.

## Claims

1. Method for working a field (3) by means of an agricultural work machine (1), wherein the agricultural work machine (1) has a sensor (4) which is arranged on the agricultural work machine (1), wherein the agricultural work machine (1) has a driver assistance system (5) which has an obstacle map (6),
wherein the driver assistance system (5) updates the obstacle map (6) by means of the sensor (4) during the working of the field (3),
wherein the agricultural work machine (1) is part of a group (10) of agricultural work machines (1) which jointly works the field (3),
wherein the agricultural work machines (1) in the group (10) communicate with one another directly or indirectly, in particular via the Internet,
wherein the agricultural work machines (1) in the group (10) share the obstacle map (6) and/or an updated obstacle map (9) with one another, wherein at least two agricultural work machines (1) in the group (10) have a sensor (4), and
wherein an obstacle (6) is only included in the obstacle map (6) when it has been detected by these two agricultural work machines (1).

2. Method according to Claim 1, **characterized in that** the obstacle map (6) is additionally updated on the basis of a driver input, preferably in that the driver assistance system (5) determines an obstacle (2) or a property of an obstacle (2) by means of the sensor (4), displays it to the driver (7) for checking, and updates the obstacle map (6) on the basis of an input by the driver (7) in response to the display.

3. Method according to Claim 1 or 2, **characterized in that** the driver assistance system (5) classifies obstacles (2) detected by means of the sensor (4) into different categories on the basis of pattern recognition, preferably **in that** the driver assistance system (5) classifies the obstacles (2) at least into invisible obstacles (2) and/or temporarily visible obstacles (2) and/or permanently visible obstacles (2).

4. Method according to one of Claims 1 to 3, **characterized in that** updates to the obstacle map (6) in the group (10) are communicated in real time from at least one agricultural work machine (1) to at least one further agricultural work machine (1), preferably **in that** a driver assistance system (5) of the further agricultural work machine (1) reacts to an obstacle (2) updated in this way by controlling the agricultural work machine (1), in particular changing a driving route or stopping the agricultural work machine (1).

## Revendications

1. Procédé de travail dans un champ (3) au moyen d'une machine de travail agricole (1), la machine de travail agricole (1) comprenant un capteur (4) qui est disposé sur la machine de travail agricole (1), la machine de travail agricole (1) présentant un système d'aide à la conduite (5) qui comprend une carte des obstacles (6),
le système d'aide à la conduite (5) mettant à jour la carte des obstacles (6) au moyen du capteur (4), au cours du travail dans le champ (3),
la machine de travail agricole (1) faisant partie d'un groupe (10) de machines de travail agricoles (1) qui effectuent ensemble un travail dans le champ (3),
les machines de travail agricoles (1) du groupe (10) communiquant directement ou indirectement entre elles, en particulier via Internet,
les machines de travail agricoles (1) du groupe (10) partageant entre elles la carte des obstacles (6) et/ou une carte des obstacles mise à jour (9),
au moins deux machines de travail agricoles (1) du groupe (10) présentant un capteur (4), et
un obstacle (6) étant inclus dans la carte des obstacles (6) seulement lorsqu'il a été identifié par ces deux machines de travail agricoles (1).

2. Procédé selon la revendication 1, **caractérisé en ce que** la carte des obstacles (6) est en outre mise à jour sur la base d'une saisie du conducteur, de préférence **en ce que** le système d'aide à la conduite (5) détermine un obstacle (2) ou une propriété d'un obstacle (2) au moyen du capteur (4), l'indique au conducteur (7) en vue de la vérification, et, en fonction d'une saisie du conducteur (7) en réaction à l'affichage, met à jour la carte des obstacles (6).

3. Procédé selon la revendication 1 ou 2, **caractérisé en ce que** le système d'aide à la conduite (5) classe les obstacles (2) identifiés à l'aide du capteur (4) dans des catégories différentes, sur la base d'une reconnaissance de formes, de préférence **en ce que** le système d'aide à la conduite (5) classe les obstacles (2) au moins en obstacles (2) invisibles et/ou en obstacles (2) temporairement visibles et/ou en obstacles (2) visibles en permanence.

4. Procédé selon une des revendications 1 à 3, **caractérisé en ce que** dans le groupe (10), les mises à jour de la carte des obstacles (6) sont communiquées en temps réel par au moins une machine de travail agricole (1) à au moins une autre machine de travail agricole (1), de préférence **en ce qu'**un système d'aide à la conduite (5) de l'autre machine de travail agricole (1) réagit à un obstacle (2) mis à jour de cette manière, par une activation de la machine de travail agricole (1), notamment une modification de son itinéraire ou un arrêt de la machine de travail agricole (1).
